# EUROPEAN PATENT SPECIFICATION

(11) **EP 3 784 443 B1**
(45) Date of publication and mention of the grant of the patent: **21.06.2023**
(21) Application number: 19793905.1
(22) Date of filing: 11.04.2019
(51) Int. Cl.: B25B 27/02, B30B 12/00, E21B 19/16, E21B 19/00, E21B 29/00, B25B 27/14

(54) **PINNING TOOL FOR PINNING A TUBULAR STRUCTURE**
BEFESTIGUNGSWERKZEUG ZUM BEFESTIGEN EINER ROHRFÖRMIGEN STRUKTUR
OUTIL DE CLAVETAGE POUR CLAVETER UNE STRUCTURE TUBULAIRE

(30) Priority: 23.04.2018 NO 20180560
(43) Date of publication of application: 03.03.2021
(73) Proprietor: Smart Installations As, 4098 Tananger (NO)
(72) Inventor: BIRKELAND, Petter, 4056 TANANGER (NO)
(74) Representative: Håmsø Patentbyrå AS
(86) International application number: PCT/NO2019/050080
(87) International publication number: WO 2019/209113

(56) References cited:
- EP-A1- 2 447 463
- EP-A1- 2 447 463
- EP-A2- 1 084 798
- WO-A1-2008/032341
- GB-A- 2 528 664
- US-A- 4 007 705
- US-A1- 2012 291 606
- US-A1- 2013 146 305
- US-A1- 2013 220 436

## Description

The invention relates to a pinning tool for penetrating a pin through a sidewall of a tubular structure, such as a casing. The invention further relates to a combined pinning tool and cutting tool for penetrating the pin through the sidewall of the tubular structure and cutting the tubular structure. The invention also relates to a method for pinning a tubular structure using the pinning tool.

During operations on an oil rig there is sometimes required to cut tubular structures, such as casings, drill strings, production tubing and risers. Typically, the tubular structures are cut in short sections for easier handling. After cutting, the tubular structures are usually lifted away from the drill floor. A commonality with many of the tubular structures being cut is that they often comprise several pipes positioned within each other, pipe-in-pipe. There is a risk that one or several pipes within another pipe may slide or fall out after being cut and then lifted.

There has been developed techniques for drilling a hole through the pipes and inserting a bolt prior to cutting to avoid the abovementioned risk. This technique is known as pinning. The problem with this way of pinning pipes is that it is time consuming. Thus, there is a need for faster pinning techniques.

EP 2 447 463 A1 discloses a subsea pinning machine for pinning together a tubular member assembly, by drilling a drill pin through the assembly and thereafter releasing the drill bit.

The invention has for its object to remedy or to reduce at least one of the drawbacks of the prior art, or at least provide a useful alternative to prior art.

The object is achieved through features, which are specified in the description below and in the claims that follow.

The invention is defined by the independent patent claims. The dependent claims define advantageous embodiments of the invention.

In a first aspect the invention relates more particularly to a pinning tool for pinning a tubular structure by pressing a pin through a sidewall of the tubular structure, the pinning tool comprising:
- a tool body configured for receiving the tubular structure;
- an actuator mounted on the tool body, the actuator being provided with a piston rod, wherein the actuator is configured for displacing the piston rod in a translational movement;

- a pin adaptor releasably coupled to the piston rod of the actuator and being configured for receiving and holding the pin to be pressed through and remain in the sidewall of the tubular structure, and
- a reaction member for fixing a relative position between the tool body and the tubular structure during pinning,
wherein the translational movement of the piston rod causes displacement of the pin adaptor, thereby pressing, in operational use, the pin through the sidewall of the tubular structure.

Pinning (drilling a hole through the tubular structure and treading a pin through the hole) is a known term in the technical field of oil and gas recovery. The invention effectively defines pressing a pin through a sidewall of the tubular structure (which remains) as pinning. The effect of the pinning tool in accordance with the invention is as follows. In operational use of the pinning tool the pin is placed on and held by the pin adaptor. Subsequently the tubular structure is received by the tool body and the actuator is used to press the pin through the tubular structure. The (hydraulic) actuator that is known from cutting tools conveniently provides very high forces and the inventor realized that this effect may be conveniently used for pinning. Contrary to the known pinning technique of drilling a hole and treading a pin through the hole, the pinning operation in accordance with the invention may be carried out much faster, typically in the order of 5-10 minutes.

It should be understood that the invention is not limited to pressing the pin through only one sidewall of the tubular structure. However, the pin may be pressed through the entire tubular structure, and several tubular structures positioned within each other.

In an embodiment, a longitudinal axis of the tubular structure should be substantially perpendicular to a direction of the translational movement during pinning. However, this should not be considered to restrict the pinning tool from operating at different angles between the longitudinal axis of the tubular structure and the direction of the translational movement. A further effect of the invention is that the pin may restrict tubular structures positioned within a larger tubular structure from sliding and/or rotating relative to the outer tubular structure. The pin may also be used as a lifting point.

In an embodiment, the actuator, the pin adaptor and the tool body may be arranged such that, in operational use when the pin is provided on and held by the pin adaptor, the pin penetrates through the sidewall, wherein a longitudinal axis of the pin is substantially parallel to a direction of the translational movement. Aligning the pin parallel to the direction of the translational movement has the effect that the risk of damaging, such as breaking or bending, the pin during pinning is reduced. In a preferred embodiment, the longitudinal axis of the pin may be aligned with a longitudinal axis of the piston rod. This has the effect that the force from the actuator is transferred in a straight line through the piston rod and the pin, thus not inducing any bending moment in the pin, pin adaptor or piston rod.

In an embodiment the pin is provided on and held by the pin adaptor. In the pinning process of the current invention the pin is pressed through (penetrating) the sidewall of the tubular structure and remains there. This means that the pinning tool of the invention may be sold without the pin. The pin is typically releasably coupled to the pin adaptor in operational use of the pinning tool. In this embodiment the pin has been provided to the pinning tool.

In an embodiment, the pin may be provided with a projection extending helically about the longitudinal axis. The helical projection may cause the pin to rotate about the longitudinal axis as it is penetrating the tubular structure. This embodiment should not be understood as the pin being actively rotated by for example a motor while it is penetrating the tubular structure. The rotation is merely an effect of the penetration itself. One effect of the pin rotation is that the pin may penetrate the sidewall of the tubular structure more easily, i.e. with less axial force.

In an embodiment, a first end portion of the pin may be replaceable. This embodiment of the invention has the effect that the first end portion, for example a tip of the pin, may be replaced to suite the tubular structure to be pinned. For example, the first end portion should have a higher yield strength than the tubular structure to avoid yielding the pin during pinning. Thus, for a tubular structure of a high-grade material, the first end portion may be replaced with one having an even higher-grade material than the tubular structure. In one embodiment, the entire pin may be fabricated from a material having a higher grade than the material of the tubular structure.

In an embodiment, a position of the pin adaptor relative to the tubular structure may be adjustable in a transverse direction orthogonal to the longitudinal axis. Adjusting a transverse position of the pin adaptor with respect to the tubular structure has the effect that the pin entry point in the sidewall of the tubular structure may be adjusted. This may be advantageous if there are one or more pipes eccentrically positioned within the outer pipe. Thus, to ensure that the pin penetrates all the pipes it may be required to adjust the transverse position of the adaptor.

In an embodiment, the reaction member may be hinged to the tool body, and, in a closed position, enveloping the tubular structure. Hinging the reaction member to the tool body has the effect that it may be swung out of the way when positioning the pinning tool adjacent the tubular structure. Upon positioning, the reaction member may be swung in and connected to the tubular structure to fix the relative position between the pinning tool and the tubular structure.

The reaction member may envelop the tubular structure. Enveloping the tubular structure may be understood as surrounding or enfolding the tubular structure. One effect of enveloping the tubular structure is that it creates firm anchoring between the pinning tool and the tubular structure.

In an embodiment, the tubular structure is one of the group consisting of: a casing, a conductor, a drill string, a production tubing, and a riser. These tubular structures are the most conventional types that may need to be pinned during operations on an oil rig. It should be noted that the invention also facilitates pinning of multiple tubular structures positioned within each other and having cement in between them. This may be particularly relevant for a casing or conductor having one or multiple casings or tubing inside, as the annular space in between these are often cemented.

In a second aspect the invention relates more particularly to a combined pinning tool and cutting tool for pinning and cutting the tubular structure, said combined tool comprising:
- the pinning tool according to any of the preceding claims;
- a non-rotatable cutting element connected to the piston rod;
- a second reaction member for applying a reaction force on the tubular structure during cutting.

The combined pinning and cutting tool has the effect that a pinning operation and a cutting operation may be performed by the same tool, and much faster than the conventional techniques allow for. Said combined tool may have two modes of operation, one pinning mode and one cutting mode. Cutting may be performed by a second translational movement of the piston rod.

In an embodiment the second reaction member may be hinged to the tool body and comprises a second cutting element directed towards, in an operational position, the non-rotatable cutting element for facilitating the cutting. The effect of hinging the second reaction member to the tool body is that, in the pinning mode, the second reaction member may be swung out of the way. Thus, depending on what mode of operation is required, pinning or cutting, the relevant reaction member may be selected.

The effect of having a further cutting element on the second reaction member is that the cutting may be carried out quicker, thus reducing cutting time. In one embodiment, the second reaction member may be configured such that in the operational position, i.e. closed position, a distance between a longitudinal axis of the tubular element and the piston rod is reduced compared to the said distance in pinning mode. Thus, a stroke of the piston rod may be similar in both pinning mode and cutting mode.

In a third aspect the invention relates more particularly to a method for pinning the tubular structure, by means of the pinning tool in accordance with any of the claims 1 to 8, the method comprising the following steps:
- providing the pinning tool with a pin releasably held by the pin adaptor;
- positioning the pinning tool adjacent the tubular structure;
- fixing the position of the pinning tool relative to the tubular structure;
- activating the pinning tool for pressing the pin through the sidewall of the tubular structure by carrying out the translational movement of the piston rod of the actuator, and
- releasing the pin from the pin adaptor.

The effect of pinning a tubular structure according to this embodiment of the invention is that the pinning may be carried out much faster compared to the conventional technique of drilling through the tubular structure.

In an embodiment, in the step of positioning the pinning tool, the positioning comprises adjusting a position of the pin adaptor relative to the tubular structure in a transverse direction orthogonal to the longitudinal axis. The pinning tool of this embodiment of the invention provides means for ensuring that the pin may penetrate internal tubular structures eccentrically positioned with respect to the outer tubular structure.

In the following is described an example of a preferred embodiment illustrated in the accompanying drawings, wherein:
- Fig. 1: shows a perspective view of a pinning tool according to one embodiment of the in-vention;
- Fig. 2: shows a plane view of the pinning tool with a reaction member in an open position;
- Fig. 2A: shows a portion of a pin according to one embodiment of the invention;
- Fig. 3: shows a perspective view of the pinning tool in an engaged position;
- Fig. 4A-E: shows, in a smaller scale than figure 2, in a simplified manner the various steps of a pinning operation using the pinning tool;
- Fig. 5A: shows, in the same scale as figure 1, a combined pinning and cutting tool according to one embodiment of the invention, and
- Fig. 5B: shows, in a smaller scale than figure 5A, a plane view of the combined pinning and cutting tool.

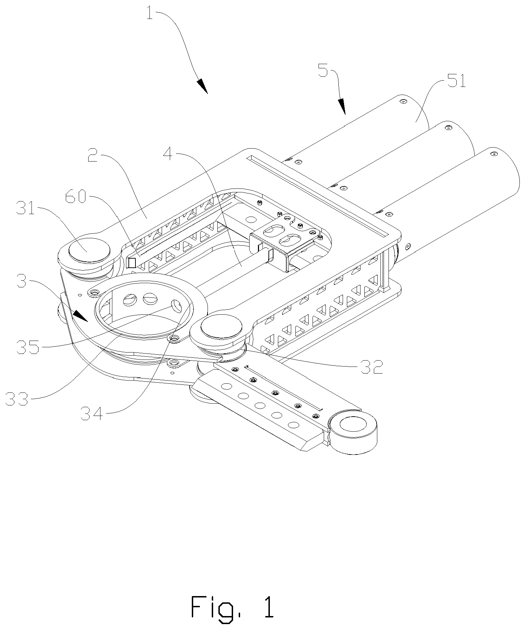

In the figures and detailed description only one example of a pinning tool is given. It must be stressed that the invention is not limited to this example. Figure 1 shows a perspective view of an embodiment of a pinning tool 1 in accordance with the invention. The pinning tool 1 may be installed on the drill floor as a mount onto a roughneck (not shown) or as a stand-alone system (not shown), which may be run back and forth (for instance using a rail system) over a Rotary Kelly Bushing (RKB) for each pinning operation. Alternatively, it may be manipulated by means of a crane or manipulator (not shown).

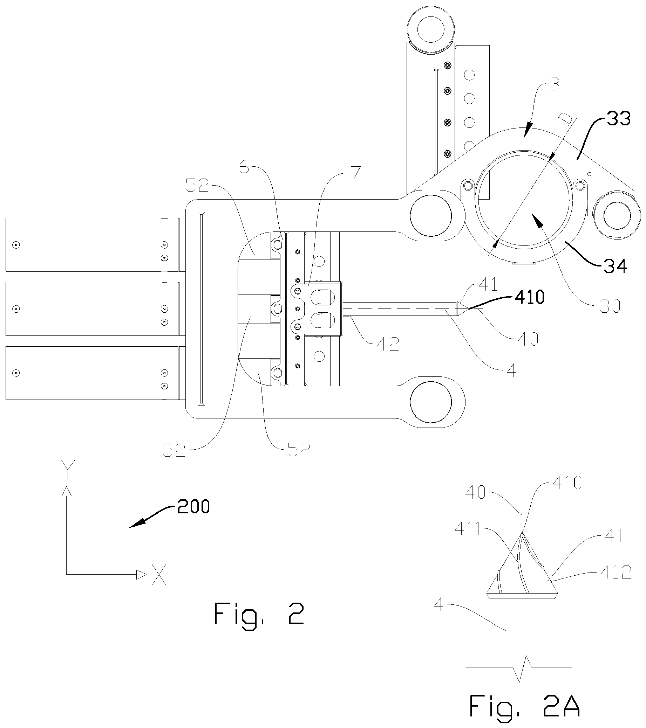

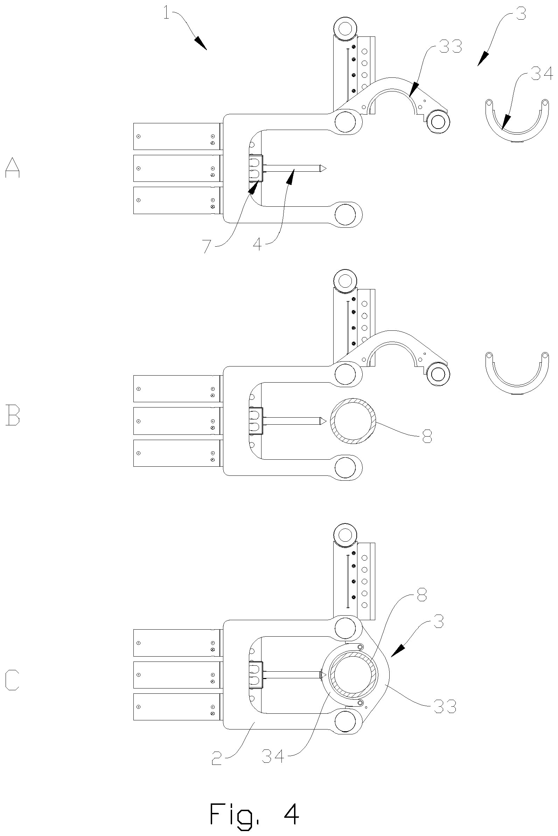

Figure 1 shows the pinning tool 1 comprising a tool body 2. A rotatable reaction member 3 is mounted on the tool body 2. The reaction member 3 may be selectively opened or closed. The reaction member 3 comprises a first enveloping element 33 and a second enveloping element 34 forming an enclosure 30 (see figure 2) for receiving a tubular structure 8 (see figure 4B). The second enveloping element 34 is connectable to the first enveloping element 33.

The reaction member 3 is connected to the tool body 2 by a hinging mechanism 32. In a closed position, the reaction member 3 may be locked in place by a locking bolt 31 insertable through the tool body 2 and the reaction member 3.

In the closed position, the reaction member 3 fixes a relative position between the tool body 1 and the tubular structure 8. An inner diameter D (see figure 2) of the enveloping elements 33, 34 may be adjusted by inserts to match an outer diameter of the relevant tubular structure 8 and provide firm anchoring between the pinning tool 1 and the tubular structure 8.

The second enveloping element 34 is provided with a hole 35 for letting a pin 4 pass through. The first enveloping element 33 may also be provided with a similar hole (not shown).

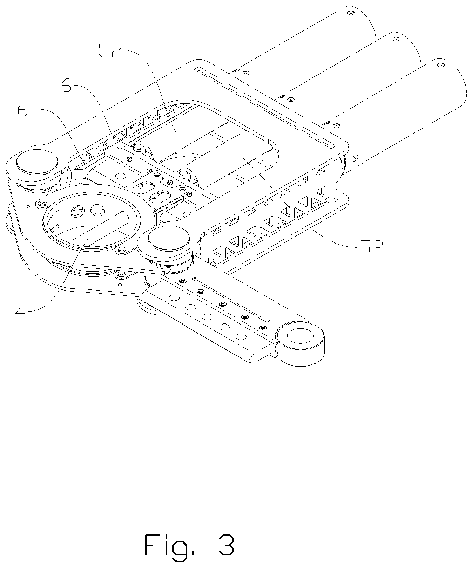

Figure 1 further shows the pinning tool 1 comprising an actuator 5. In this specific embodiment, the pinning tool 1 is provided with three actuators 5. The actuator 5 comprises a housing 51 and a piston rod 52 (see figure 3). The actuator 5 is operated by hydraulic pressure to displace the piston rod 52. The actuator 5 is configured to deliver a considerable amount of axial force, for example 1000 tons.

Each piston rod 52 is coupled to a common bracket 6 (see figure 3). As the actuators 5 extend the piston rods 52 towards the reaction member 3, the bracket 6 is guided along a track 60 on the tool body 2 for support.

Figure 2 shows a pin adaptor 7 coupled to the common bracket 6. The pin adaptor 7 is connectable to the common bracket 6 by means of for example bolts. A transverse position of the pin adaptor 7 relative to the bracket 6 is adjustable. A transverse direction corresponds to the Y-direction illustrated by the X-Y coordinate system 200. Adjusting the transverse position of the pin adaptor 7 may be required to ensure that the pin 4 is pressed through (=penetrates) the tubular structure 8 at a desired location, such as through a center of the tubular structure 8. The pin adaptor 7 is configured to receive and support the pin 4. A longitudinal axis 40 of the pin 4 is shown to be arranged parallel to piston rods 52, and thus parallel to the direction of the translational movement of the piston rods 52.

A first end portion 41 of the pin 4 is configured with a pointed tip 410 to penetrate a sidewall 80 of the tubular structure 8 more easily. The first end portion 41 may have different embodiments, only one is shown in the figures. In one embodiment, the first end portion 41 is removable. This enables replacing the first end portion 41 of the pin 4, for example with a first end portion 41 made from a higher-grade material.

A second end portion 42 of the pin 4 is connectable to the pin adaptor 7. In one embodiment, the pin 4 may be fixed to the pin adaptor 7. In another embodiment, the pin 4 may be rotatably connected to the pin adaptor 7. A rotatable connection allows the pin 4 to rotate as it is pressed through the tubular structure 8. Figure 2a shows a portion of an embodiment of the pin 4 comprising a projection 411 extending helically about the longitudinal axis 40. The helical projection 411 projects from an outer surface 412 of the first end portion 41 of the pin 4. The projection 411 may cause the pin 4 to rotate as it is pressed through the tubular structure 8. The rotation may reduce a required axial force to drive the pin 4 through the tubular structure 8.

In figure 2 the piston rods 52 are shown to be partially extended and the reaction member 3 is in the open position. In figure 3 the piston rods 52 are shown to be fully extended and the reaction member 3 is in the closed position. With the piston rods 52 fully extended, the pin 4 cross through the enclosure 30.

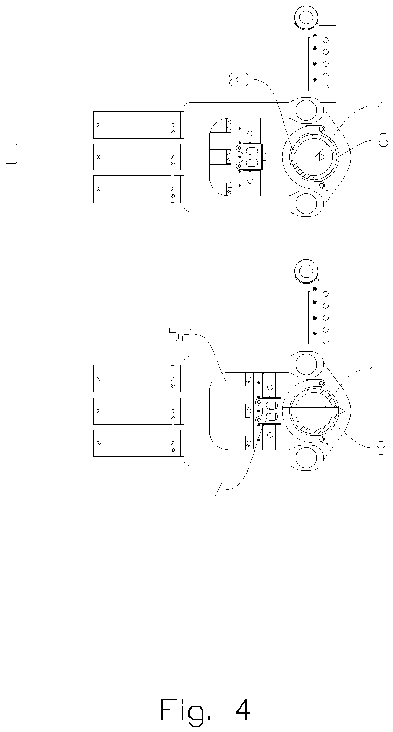

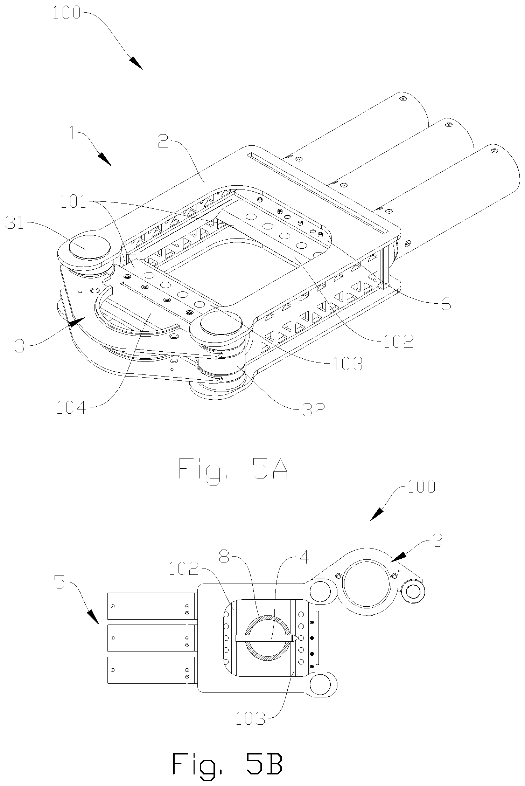

Figure 4 and 5 shows a pinning operation in simplified steps. Figure 4A shows the pinning tool 1 in a starting position, wherein the reaction member 3 is in the open position and the second enveloping element 34 is disconnected from the first enveloping element 33. The piston rods 52 are in a retracted position and the pin 4 is mounted on the pin adaptor 7.

Figure 4B shows the pinning tool 1 positioned adjacent a tubular structure 8, such as a casing. In figure 4C the reaction member 3 is rotated to the closed position and the second enveloping element 34 is connected to the first enveloping element 33 to fix the relative position of the tubular structure 8 relative to the tool body 2. The pinning tool 1 is now ready to pin the tubular structure 8.

Figure 4D shows the pin 4 pressed through the sidewall 80 of the tubular structure 8. Figure 4E shows the pin 4 fully pressed through the tubular structure 8. After pinning, the pin 4 is disconnected from the pin adaptor 7, leaving the pin 4 in the tubular structure 8 while the piston rods 52 are retracted.

Figure 5A shows a combined pinning and cutting tool 100. The combined tool 100 comprises the pinning tool 1 as previously described and a cutting tool 101. As may be seen from the previous figures, the pinning tool 1 is depicted comprising the cutting tool 101. However, it is important to note that the pinning tool 1 does not require the cutting tool 101 to function, it is merely for illustration purposes. The cutting tool 101 comprises two cutting blades 102, 103. A first cutting blade 102 mounted on the common bracket 6 and a second cutting blade 103 mounted on a second independently rotatable reaction member 104. The second rotatable reaction member 104 is hinged to the tool body 2 and may be selectively opened or closed, independently of the reaction member 3 used for pinning. The second rotatable reaction member 104 may be locked in a closed position by the locking bolt 31.

The tubular structure 8 is cut by the translational movement of the piston rods 52, displacing the first cutting blade 102 towards the second cutting blade 103. The second cutting blade 103 reduces the required time to perform the cut. Cutting may be performed after the tubular structure 8 has been pinned. The cutting blades 102, 103 may be arranged such that they cut through the tubular structure 8 at a different elevation than where the pin 4 is located. Alternatively, the cutting blades 102, 103 may be arranged at the same elevation as the pin 4. However, between pinning and cutting, the tubular structure 8 is lifted or lowered relative to the tool body 2 such that the cut is performed at a different elevation from where the pin 4 is located.

In a situation where several tubular structures are positioned within each other (not shown), pinning the tubular structures prior to cutting may prevent an inner tubular structure from dropping or sliding relative to an outer tubular structure after cutting.

Figure 5B shows an example of a tubular structure 8 that has been pinned and is ready to be cut. As can be seen from figure 5B, the tubular structure 8 is positioned closer to the actuators 5 as compared to when the tubular structure 8 is held by the reaction member 3 used for pinning. This is due to the limitation in stroke of the piston rods 52. To enable the cutting blades 102, 103 to fully cut through the tubular structure 8 within the stroke of the piston rods 52, the tubular structure must be positioned closer to the first cutting blade 102.

From figure 5B it can also be seen that the cutting blades 102, 103 are positioned at a lower elevation than the pin 4 to prevent the pin 4 from restricting the cutting operation. It can also be seen that the reaction member 3 used for pinning is opened in figure 5B, as compared to closed in figure 5A. In figure 5A the second enveloping element 34 is also removed. Whether the reaction member 3 is opened or closed has no effect on the cutting operation. One or the other may be desirable for practical reasons.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. A pinning tool (1) for pinning a tubular structure (8) by pressing a pin (4) through a sidewall (80) of the tubular structure (8), the pinning tool (1) comprising:
- a tool body (2) configured for receiving the tubular structure (8);
- an actuator (5) mounted on the tool body (2), the actuator (5) being provided with a piston rod (52), wherein the actuator (5) is configured for displacing the piston rod (52) in a translational movement;
- a pin adaptor (7) releasably coupled to the piston rod (52) of the actuator (5) and being configured for receiving and releasably holding the pin (4) to be pressed through and remain in the sidewall (80) of the tubular structure (8), and
- a reaction member (3) for fixing a relative position between the tool body (2) and the tubular structure (8) during pinning, wherein the translational movement of the piston rod (52) causes displacement of the pin adaptor (7), thereby pressing, in operational use, the pin (4) through the sidewall (80) of the tubular structure (8).

2. The pinning tool (1) according to claim 1, wherein the actuator (5), the pin adaptor (7) and the tool body (2) are arranged such that, in operational use when the pin (4) is provided on and held by the pin adaptor (7), the pin penetrates through the sidewall (80), wherein a longitudinal axis (40) of the pin (4) is substantially parallel to a direction of the translational movement.

3. The pinning tool (1) according to claim 1, wherein the pin (4) is provided on and held by the pin adaptor (7).

4. The pinning tool (1) according to claim 3, wherein the pin (4) is provided with a projection (411) extending helically about the longitudinal axis (40).

5. The pinning tool (1) according to claim 3 or 4, wherein a first end portion (41) of the pin (4) is replaceable.

6. The pinning tool (1) according to any of the preceding claims, wherein a position of the pin adaptor (7) relative to the tubular structure (8) is adjustable in a transverse direction (Y) orthogonal to the longitudinal axis.

7. The pinning tool (1) according to any of the preceding claims, wherein the reaction member (3) is hinged to the tool body (2), and, in a closed position, enveloping the tubular structure (8).

8. The pinning tool (1) according to any of the preceding claims, wherein the tubular structure (8) is one of the group consisting of: a casing, a conductor, a drill string, a production tubing, and a riser.

9. A combined pinning tool and cutting tool (100) for pinning and cutting the tubular structure (8), said combined tool (100) comprising:
- the pinning tool (1) according to any of the preceding claims;
- a non-rotatable cutting element (102) connected to the piston rod (52);
- a second reaction member (104), connected to the tool body (2), for applying a reaction force on the tubular structure (8) during cutting.

10. The combined pinning and cutting tool (100) according to claim 9, wherein the second reaction member (104) is hinged to the tool body (2) and comprises a second cutting element (103) directed towards, in an operational position, the non-rotatable cutting element (102) for facilitating the cutting.

11. A method for pinning a tubular structure (8) by means of the pinning tool (1) in accordance with any of the claims 1 to 8, the method comprising the following steps:
- providing the pinning tool (1) with a pin (4) releasably held by the pin adaptor (7);
- positioning the pinning tool (1) adjacent the tubular structure (8);
- fixing the position of the pinning tool (1) relative to the tubular structure (8);
- activating the pinning tool (1) for pressing the pin (4) through the sidewall (80) of the tubular structure (8) by carrying out the translational movement of the piston rod (52) of the actuator (5), and
- releasing the pin (4) from the pin adaptor (7).

12. The method according to claim 11, wherein, in the step of positioning the pinning tool (1), the positioning comprises adjusting a position of the pin adaptor (7) relative to the tubular structure (8) in a transverse direction orthogonal to the longitudinal axis.

## Patentansprüche

1. Pinningwerkzeug (1) zum Pinnen einer rohrförmigen Struktur (8) durch Drücken eines Stifts (4) durch eine Seitenwand (80) der rohrförmigen Struktur (8), wobei das Pinningwerkzeug (1) aufweist:
- einen Werkzeugkörper (2), welcher ausgebildet ist, um die rohrförmige Struktur (8) aufzunehmen;
- einen Aktuator (5), welcher auf dem Werkzeugkörper (2) befestigt ist, wobei der Aktuator (5) mit einer Kolbenstange (52) ausgestattet ist, wobei der Aktuator (5) ausgebildet ist, um die Kolbenstange (52) in eine Translationsbewegung zu versetzen;
- einen Stift-Adapter (7), welcher lösbar an der Kolbenstange (52) des Aktuators (5) befestigt ist und welcher ausgebildet ist, um den Stift (4), welcher durch die Seitenwand (80) der rohrförmigen Struktur (8) hindurchgedrückt werden soll und in der Seitenwand (80) der rohrförmigen Struktur (8) verbleiben soll, aufzunehmen und lösbar zu halten, und
- ein Reaktionsglied (3) zum Fixieren einer relativen Position zwischen dem Werkzeugkörper (2) und der rohrförmigen Struktur (8) während des Pinnens, wobei die Translationsbewegung der Kolbenstange (52) eine Verschiebung des Stift-Adapters (7) bewirkt, und dadurch während des Betriebs, den Stift (4) durch die Seitenwand (80) der rohrförmigen Struktur (8) hindurchdrückt.

2. Pinningwerkzeug (1) gemäss Anspruch 1, wobei der Aktuator (5), der Stift-Adapter (7) und der Werkzeugkörper (2) derart angeordnet sind, dass während des Betriebs, wenn der Stift (4) auf dem Stift-Adapter (7) angeordnet und vom Stift-Adapter (7) gehalten ist, der Stift durch die Seitenwand (80) hindurchtritt, wobei eine Längsachse (40) des Stifts (4) im Wesentlichen parallel zu einer Richtung der Translationsbewegung verläuft.

3. Pinningwerkzeug (1) gemäss Anspruch 1, wobei der Stift (4) auf dem Stift-Adapter (7) angeordnet und vom Stift-Adapter (7) gehalten ist.

4. Pinningwerkzeug (1) gemäss Anspruch 3, wobei der Stift (4) mit einem Vorsprung (411) ausgebildet ist, welcher sich spiralförmig um die Längsachse (40) herum erstreckt.

5. Pinningwerkezeug (1) gemäss Anspruch 3 oder 4, wobei ein erster Endabschnitt (41) des Stifts (4) auswechselbar ist.

6. Pinningwerkzeug (1) gemäss einem der vorhergehenden Ansprüche, wobei eine Position des Stift-Adapters (7) in Bezug auf die rohrförmige Struktur (8) in einer transversalen Richtung (Y) rechtwinklig zur Längsachse einstellbar ist.

7. Pinningwerkzeug (1) gemäss einem der vorhergehenden Ansprüche, wobei das Reaktionsglied (3) am Werkzeugkörper (2) angelenkt ist, und in einer geschlossenen Position die rohrförmige Struktur (8) umschliesst.

8. Pinningwerkzeug (1) gemäss einem der vorhergehenden Ansprüche, wobei die rohrförmige Struktur (8) ausgewählt ist aus der Gruppe bestehend aus: einem Gehäuse, einer Leitung, einem Bohrstrang, einer Produktionsleitung, und einer Steigleitung.

9. Kombiniertes Pinning- und Schneidewerkzeug (100) zum Pinnen und Schneiden der rohrförmigen Struktur (8), wobei das besagte kombinierte Werkzeug (100) aufweist:
- das Pinningwerkzeug (1) gemäss einem der vorhergehenden Ansprüche;
- ein nicht-drehbares Schneideelement (102), welches mit der Kolbenstange (52) verbunden ist;
- ein zweites Reaktionsglied (104), welches mit dem Werkzeugkörper (2) verbunden ist, zum Anlegen einer Reaktionskraft an die rohrförmige Struktur (8) während des Schneidevorgangs.

10. Kombiniertes Pinning- und Schneidewerkzeug (100) gemäss Anspruch 9, wobei das zweite Reaktionsglied (104) am Werkzeugkörper (2) angelenkt ist und ein zweites Schneideelement (103) aufweist, welches in einer Betriebsstellung zum nicht-drehbaren Schneideelement (102) hin ausgerichtet ist, um den Schneidevorgang zu erleichtern.

11. Verfahren zum Pinnen einer rohrförmigen Struktur (8) mittels des Pinningwerkzeugs (1) gemäss einem der Ansprüche 1 bis 8, wobei das Verfahren die folgenden Schritte beinhaltet:
- Bereitstellen des Pinningwerkzeugs (1) mit einem Stift (4), welcher lösbar vom Stift-Adapter (7) gehalten wird;
- Positionieren des Pinningwerkzeugs (1) angrenzend an die rohrförmige Struktur (8);
- Fixieren der Position des Pinningwerkzeugs (1) in Bezug auf die rohrförmige Struktur (8);
- Aktivieren des Pinningwerkzeugs (1) zum Drücken des Stifts (4) durch die Seitenwand (80) der rohrförmigen Struktur (8) durch Ausführen der Translationsbewegung der Kolbenstange (52) des Aktuators (5), und
- Lösen des Stifts (4) vom Stift-Adapter (7).

12. Verfahren gemäss Anspruch 11, wobei, im Schritt des Positionierens des Pinningwerkzeugs (1), das Positionieren ein Einstellen einer Position des Stift-Adapters (7) in Bezug auf die rohrförmige Struktur (8) in einer transversalen Richtung rechtwinklig zur Längsachse beinhaltet.

## Revendications

1. Un outil de clavetage (1) pour claveter une structure tubulaire (8) en pressant une clavette (4) à travers une paroi latérale (80) de la structure tubulaire (8), l'outil de clavetage (1) comprenant :
- un corps d'outil (2) configuré pour recevoir la structure tubulaire (8) ;
- un actionneur (5) monté sur le corps d'outil (2), l'actionneur (5) étant pourvu d'une tige de piston (52), dans lequel l'actionneur (5) est configuré pour déplacer la tige de piston (52) dans un mouvement de translation;
- un adaptateur de clavette (7) couplé de manière amovible à la tige de piston (52) de l'actionneur (5) et étant configuré pour recevoir et maintenir de manière amovible la clavette (4) à presser à travers de et à rester dans la paroi latérale (80) du structure tubulaire (8), et
- un organe de réaction (3) pour fixer une position relative entre le corps d'outil (2) et la structure tubulaire (8) lors du clavetage, dans lequel le mouvement de translation de la tige de piston (52) provoque le déplacement de l'adaptateur de clavette (7), pressant ainsi, en utilisation opérationnelle, la clavette (4) à travers la paroi latérale (80) de la structure tubulaire (8).

2. Outil de clavetage (1) selon la revendication 1, dans lequel l'actionneur (5), l'adaptateur de clavette (7) et le corps d'outil (2) sont agencés de sorte que, en utilisation opérationnelle lorsque la clavette (4) est prévue sur et maintenue par l'adaptateur de clavette (7), la clavette pénètre à travers la paroi latérale (80), dans lequel un axe longitudinal (40) de la clavette (4) est sensiblement parallèle à une direction du mouvement de translation.

3. Outil de clavetage (1) selon la revendication 1, dans lequel la clavette (4) est prévue sur et maintenue par l'adaptateur de clavette (7).

4. Outil de clavetage (1) selon la revendication 3, dans lequel la clavette (4) est pourvue d'une saillie (411) s'étendant en hélice autour de l'axe longitudinal (40).

5. Outil de clavetage (1) selon la revendication 3 ou 4, dans lequel une première partie d'extrémité (41) de la clavette (4) est remplaçable.

6. Outil de clavetage (1) selon l'une quelconque des revendications précédentes, dans lequel une position de l'adaptateur de clavette (7) par rapport à la structure tubulaire (8) est réglable dans une direction transversale (Y) orthogonale à l'axe longitudinal.

7. Outil de clavetage (1) selon l'une quelconque des revendications précédentes, dans lequel l'élément de réaction (3) est articulé sur le corps d'outil (2) et, en position fermée, enveloppant la structure tubulaire (8).

8. Outil de clavetage (1) selon l'une quelconque des revendications précédentes, dans lequel la structure tubulaire (8) fait partie du groupe constitué de: un tubage, un conducteur, un train de forage, un tubage de production et une colonne montante.

9. Un outil de clavetage et de coupe combiné (100) pour claveter et couper la structure tubulaire (8), ledit outil combiné (100) comprenant :
- l'outil de clavetage (1) selon l'une quelconque des revendications précédentes ;
- un élément de coupe non rotatif (102) relié à la tige de piston (52) ;
- un deuxième organe de réaction (104), relié au corps d'outil (2), pour appliquer une force de réaction sur la structure tubulaire (8) lors de la coupe.

10. Outil de clavetage et de coupe combiné (100) selon la revendication 9, dans lequel le deuxième élément de réaction (104) est articulé sur le corps d'outil (2) et comprend un deuxième élément de coupe (103) dirigé vers, dans une position opérationnelle, l'élément de coupe non rotatif (102) pour faciliter la coupe.

11. Un procédé de clavetage d'une structure tubulaire (8) au moyen de l'outil de clavetage (1) selon l'une quelconque des revendications 1 à 8, le procédé comprenant les étapes suivantes :
- doter l'outil de clavetage (1) d'une clavette (4) maintenue de manière amovible par l'adaptateur de clavette (7) ;
- positionner l'outil de clavetage (1) adjacent à la structure tubulaire (8) ;
- fixer la position de l'outil de clavetage (1) par rapport à la structure tubulaire (8) ;
- actionner l'outil de clavetage (1) pour presser la clavette (4) à travers la paroi latérale (80) de la structure tubulaire (8) en effectuant le mouvement de translation de la tige de piston (52) de l'actionneur (5), et
- dégager la clavette (4) de l'adaptateur de clavette (7).

12. Procédé selon la revendication 11, dans lequel, à l'étape de positionnement de l'outil de clavetage (1), le positionnement comprend le réglage d'une position de l'adaptateur de clavette (7) par rapport à la structure tubulaire (8) dans une direction transversale orthogonale à l'axe longitudinal.
